# FASCICULE DE BREVET EUROPEEN

(11) **EP 4 003 791 B1**
(45) Date de publication et mention de la délivrance du brevet: **28.10.2026**
(21) Numéro de dépôt: 20757639.8
(22) Date de dépôt: 22.07.2020
(51) Int. Cl.: B60R 13/08, B62D 35/02

(54) **DÉFLECTEUR AÉRODYNAMIQUE DESTINÉ À ÊTRE FIXÉ CONTRE LE SOUBASSEMENT DE CAISSE D'UN VÉHICULE**
AERODYNAMISCHER ABWEISER ZUR BEFESTIGUNG AM UNTERBODEN EINES FAHRZEUGS
AERODYNAMIC DEFLECTOR INTENDED TO BE SECURED TO THE UNDERBODY OF A VEHICLE

(30) Priorité: 30.07.2019 FR 1908658
(43) Date de publication de la demande: 01.06.2022
(73) Titulaire: Stellantis Auto SAS, 78300 Poissy (FR)
(72) Inventeur: BERTH, Stephane, 92320 CHATILLON (FR)
(74) Mandataire: BCIP
(86) Numéro de dépôt international: PCT/FR2020/051342
(87) Numéro de publication internationale: WO 2021/019157

(56) Documents cités:
- FR-A1- 3 068 671

## Description

### [Domaine technique]

L'invention concerne de manière générale l'aérodynamisme des véhicules automobiles et notamment l'aérodynamisme sous caisse.

Plus particulièrement, l'invention se rapporte à un déflecteur aérodynamique destiné à être fixé contre la face inférieure du soubassement de caisse d'un tel véhicule automobile

### [Technique antérieure]

Il est bien connu que l'aérodynamisme prend une part importante dans la conception d'un véhicule automobile, tant ses effets sont grands sur la consommation en carburant et le comportement sur route, notamment à grande vitesse. L'amélioration des performances aérodynamiques des véhicules peut donc contribuer significativement à la réduction des émissions polluantes, par la baisse de la consommation de carburant, tout en rendant les véhicules plus sûrs et confortables sur le plan acoustique.

Le soubassement du véhicule a un impact conséquent sur la traînée d'air générée à l'arrière du véhicule, traînée d'air qui s'oppose à l'effort de traction. Les constructeurs automobiles se sont donc orientés vers un carénage du soubassement et une diminution de la garde au sol pour limiter le volume d'air s'engouffrant sous le véhicule et faciliter l'écoulement d'air sous la caisse. Il est habituel aujourd'hui d'équiper les véhicules avec des déflecteurs en matériau plastique qui sont disposés sous caisse pour améliorer l'aérodynamisme et protéger contre des chocs des éléments sensibles tels que des canalisations.

On connaît notamment du document FR 3 059 977, un soubassement de véhicule automobile comprenant une zone de plancher avant et une zone de plancher arrière. Le document FR3068671 décrit un véhicule comportant un déflecteur formé par un panneau avant et un panneau arrière, les panneaux étant fixées à l'une de leur extrémités par des moyens de fixation communs.

Dans la zone de plancher avant, le soubassement est équipé de deux déflecteurs aérodynamiques latéraux gauche et droite, s'étendant symétriquement de part et d'autre d'une ligne d'échappement et recouvrant respectivement les parties longitudinales gauche et droite du plancher avant de sorte à assurer une fonction aérodynamique et de protection contre les projections.

Chaque déflecteur latéral comprend un panneau avant et un panneau arrière réalisées en matière plastique et s'étendant dans le prolongement longitudinal l'un de l'autre.

Ces panneaux avant et arrière des déflecteurs latéraux sont fixées au plancher en insérant des goujons soudés à ce plancher ou à des chapes solidaires de ce dernier au travers d'orifices correspondants ménagés dans les panneaux, puis en rapportant et en vissant des écrous en plastique sur les goujons, de manière à plaquer ces plateaux contre le plancher et à assurer leur fixation.

Bien qu'assurant une fixation fiable et précise des panneaux des déflecteurs latéraux sur le plancher, un tel système de fixation requiert un temps de montage relativement long pour l'opérateur.

Cet opérateur, positionné en dessous du plancher surélevé du véhicule, doit dans un premier temps soulever chaque panneau au dessus de lui en le maintenant à bout de bras, puis le positionner de sorte à faire coïncider les orifices y étant ménagés avec les goujons de fixation saillant du plancher.

A l'usager, cette étape de positionnement des panneaux s'avère particulièrement délicate à réaliser.

En effet, celle-ci s'effectue en aveugle car ces panneaux disposés entre la tête de l'opérateur et le plancher dissimulent les goujons de fixation aux yeux de cet opérateur qui doit tâtonner plusieurs minutes avant de parvenir à ses fins.

### [Exposé de l'invention]

La présente invention vise donc à améliorer la situation.

Elle propose à cet effet un déflecteur aérodynamique destiné à être fixé contre la face inférieure du soubassement de caisse d'un véhicule automobile, comportant un panneau avant et un panneau arrière destinés à s'étendre dans le prolongement longitudinal l'un de l'autre, ledit panneau avant présentant une pluralité de premiers orifices agencés de manière à pouvoir être alignés simultanément puis traversés par des premiers goujons correspondants solidaires dudit soubassement, ledit panneau arrière présentant une pluralité de seconds orifices agencés de manière à pouvoir être alignés simultanément puis traversés par des seconds goujons solidaires dudit soubassement, caractérisé en ce que ledit panneau arrière comporte à son extrémité avant des organes de guidage agencés pour coopérer chacun à coulissement, lors de sa mise en place après celle dudit panneau avant, avec une paroi de guidage correspondante ménagée à l'extrémité arrière dudit panneau avant de sorte à réaliser l'alignement desdits seconds orifices avec lesdits seconds goujons correspondants.

Cette conformation particulière de l'extrémité arrière du panneau avant et de l'extrémité avant du panneau arrière facilite grandement le montage de ce panneau arrière par un opérateur en évitant à ce dernier de tâtonner en aveugle pour réaliser l'alignement des seconds orifices de ce panneau arrière avec les seconds goujons correspondants.

L'invention permet ainsi de réduire de plusieurs minutes le temps de montage de chaque véhicule.

Selon des caractéristiques préférées dudit déflecteur selon l'invention :
- l'extrémité arrière dudit panneau avant comporte également des fourchettes de pré-positionnement saillant chacune longitudinalement vers l'arrière depuis le sommet d'une paroi de guidage correspondante, lesdites fourchettes étant agencées pour coopérer chacune par enfourchement, lors de la mise en place dudit panneau avant, avec un dit second goujon correspondant de sorte à réaliser l'alignement desdits premiers orifices avec lesdits premiers goujons correspondants ;
- lesdites parois de guidage sont incurvées et présentent chacune une section horizontale en arc cercle dont la concavité est tournée vers l'arrière ;
- lesdites parois de guidage s'étendent chacune sur un secteur angulaire compris entre 90 et 180° ;
- lesdites parois de guidage présentent chacune une forme tronconique se rétrécissant vers le haut ;
- lesdits organes de guidage sont chacun constitués par un fût d'axe vertical comprenant une paroi latérale sensiblement cylindrique ainsi qu'une paroi de fond dans laquelle est ménagé un dit second orifice ;
- chaque fût de guidage comprend des moyens de retenue d'un écrou contre la face inférieure de sa paroi de fond sur le pourtour d'un dit second orifice ; et/ou
- lesdits moyens de retenue comportent plusieurs pattes en L s'étendant depuis la face inférieure de ladite paroi de fond sur le pourtour d'un dit second orifice de sorte à définir entre elles un logement accessible à coulissement pour un tel écrou ;
- lesdits moyens de retenue comportent également une languette élastiquement déformable saillant en biais depuis la face inférieure de la paroi de fond sur le pourtour d'un dit second orifice, ladite languette étant agencée de sorte que son extrémité libre soit apte à coopérer en butée avec ledit écrou une fois celui-ci mis en place dans ledit logement de sorte à empêcher son retrait.

L'invention vise également sous un second aspect un véhicule automobile comportant au moins un tel déflecteur fixé contre la face inférieure du soubassement de caisse.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue partielle de dessous et en perspective du soubassement de caisse d'un véhicule automobile comprenant deux déflecteurs aérodynamiques latéraux s'étendant symétriquement de part et d'autre de la ligne d'échappement ;
[Fig 2] est une vue, en perspective et à plus grande échelle, illustrant la première étape de montage du panneau avant de l'un de ces déflecteurs latéraux sur le plancher avant du véhicule ;
[Fig 3] représente une vue, en perspective et sous un autre angle, illustrant la deuxième étape de montage du panneau arrière de ce déflecteur latéral sur le plancher avant du véhicule ;
[Fig 4] est une vue en coupe longitudinale verticale prise au niveau d'un fût du panneau arrière pendant la deuxième étape de montage du panneau arrière de ce déflecteur latéral; et
[Fig 5] représente une vue similaire à la figure 4 mais prise en fin de montage du déflecteur.

### [Description détaillée]

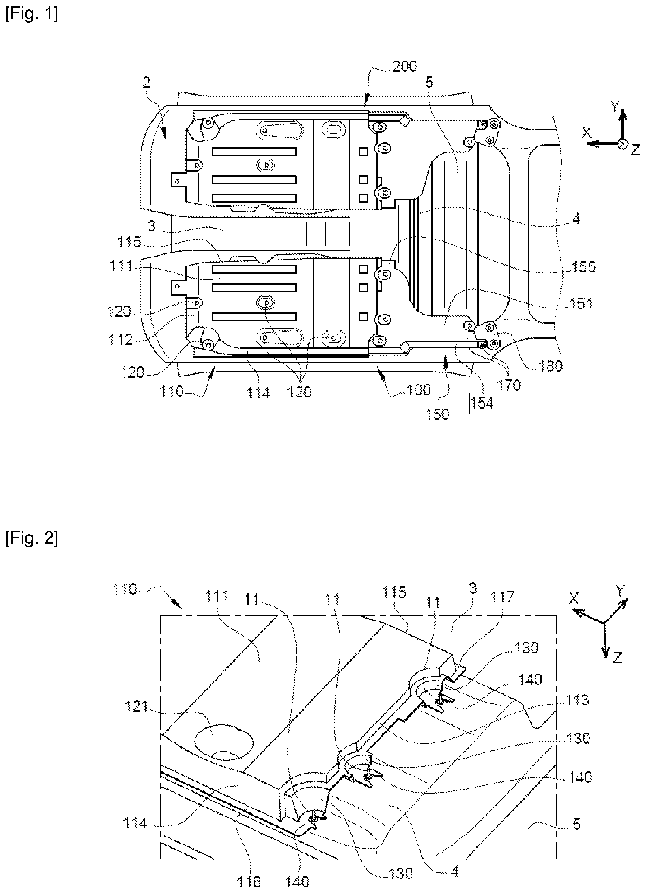

Le véhicule automobile représenté partiellement sur la vue de dessous de la figure 1, comporte deux déflecteurs aérodynamiques latéraux droit 100 et gauche 200 fixés au plancher avant 2 du soubassement de caisse de ce véhicule.

On définit par rapport au véhicule un repère orthogonal direct XYZ comprenant trois axes perpendiculaires deux à deux, à savoir :
- un axe longitudinal horizontal X, parallèle au sol et confondu avec la direction générale de déplacement du véhicule ;
- un axe transversal horizontal Y, également parallèle au sol et perpendiculaire à l'axe X ; et
- un axe vertical Z, perpendiculaire au sol ainsi qu'au plan XY horizontal.

Dans la description qui va suivre et par convention, les termes « inférieur », « supérieur », « avant » et « arrière » seront définis par rapport à la position de montage des déflecteurs aérodynamiques latéraux 100 et 200 selon l'invention dans un véhicule.

Par ailleurs, le terme « sensiblement » sera utilisé pour indiquer qu'un léger écart est admis par rapport à une position ou disposition nominale prédéterminée, tout en restant inclus dans le cadre de l'invention. Par exemple, « sensiblement perpendiculaire » indiquera qu'un écart de l'ordre de 15° par rapport à une orientation strictement perpendiculaire est admis dans le cadre de l'invention.

Les deux déflecteurs aérodynamiques latéraux 100, 200 s'étendant sensiblement symétriquement de part et d'autre d'un tunnel longitudinal d'échappement 3 à section en forme de U renversé aligné sur l'axe longitudinal médian du véhicule, de sorte à recouvrir les parties gauche et droite du plancher avant 2, de la planche à talon 4 et d'une portion du plancher d'assise ou arrière 5 afin d'assurer une fonction aérodynamique et de protection contre les projections.

On va maintenant décrire le déflecteur latéral droit 100 recouvrant la partie droite du plancher avant 2, de la planche à talon 4 et d'une portion du plancher d'assise ou arrière 5, sachant que le déflecteur latéral gauche 200 recouvrant la partie droite de ces même éléments lui est symétriquement sensiblement identique.

Ce déflecteur latéral 100 comprend un panneau avant 110 et un panneau arrière 150 en matière plastique s'étendant dans le prolongement l'un de l'autre et présentant chacun une géométrie et un agencement sous caisse adaptés pour améliorer les caractéristiques aérodynamiques du véhicule 1.

Chacun des panneaux 110, 150 est venu de moulage d'une seule pièce à partir d'un matériau thermoplastique tel que le polypropylène (PP), chargé avantageusement en fibres naturelles et/ou synthétiques afin d'améliorer sa tenue mécanique.

Présentant une forme générale de cuvette, le panneau avant 110 comprend une semelle 111 destinée à s'étendre en regard du plancher avant 2 ainsi qu'un bandeau avant 112, un bandeau arrière 113 et deux bandeaux latéraux 114, 115 bordant périphériquement la semelle 111 en s'étendant sensiblement transversalement à cette dernière.

Les deux bandeaux latéraux 114, 115 se terminent chacun par un bord libre respectif 116, 117 destiné à venir reposer en appui contre la face inférieure du plancher avant 2.

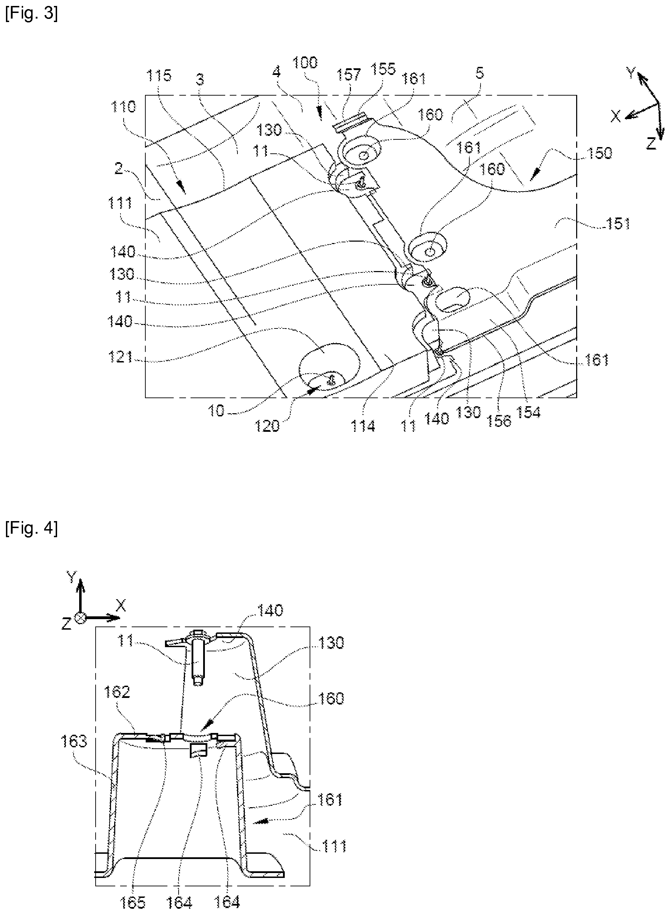

En vue de son montage sur ce plancher avant 2, le panneau avant 110 présente cinq premiers orifices de passage 120 agencés de manière à pouvoir être alignés simultanément puis traversés par des premiers goujons correspondants 10 solidaires du plancher avant 2 et saillant verticalement vers le bas depuis sa face inférieure située en regard du sol (l'un d'entre eux étant visible sur la figure 3).

Les goujons 10 comprennent chacun une embase circulaire soudée sur la face inférieure de ce plancher avant 2, ainsi qu'une tige cylindrique présentant une section circulaire de plus petit diamètre que l'embase et pourvue d'un filetage externe hélicoïdal.

Chaque premier orifice de passage 120 est ménagé dans la paroi de fond sensiblement horizontale d'un fût correspondant 121 s'étendant verticalement depuis et au dessus de la semelle 111 (figure 3).

Ces premiers orifices de passage 120 présentent un diamètre légèrement supérieur à celui des tiges filetées des goujons 10, de sorte qu'il existe un léger jeu de positionnement du panneau avant 110 par rapport au plancher avant 2 lorsque chaque premier orifice 120 de ce panneau 110 est enfilé sur la tige d'un premier goujon correspondant 10.

L'extrémité arrière du panneau avant 110 présente trois parois de guidage incurvées 130 ménagées dans le bandeau arrière 113 et présentant chacune une section horizontale en arc cercle dont la concavité est tournée vers l'arrière (figure 2).

Ces parois de guidage 130 qui s'étendent sur un secteur angulaire inférieur ou égal à 180° (et avantageusement compris entre 90° et 180°) présentent une forme tronconique se rétrécissant vers le haut.

Présentant également une forme générale de cuvette, le panneau arrière 150 comprend une semelle 151 destinée à s'étendre en regard de la portion arrière du plancher avant 2, de la planche à talon 4 et de la portion avant du plancher d'assise ou arrière 5. Ce panneau arrière 150 comprend également deux bandeaux latéraux 154, 155 bordant latéralement la semelle 151 en s'étendant sensiblement transversalement à cette dernière.

Ces deux bandeaux latéraux 154, 155 se terminent chacun par un bord libre respectif 156, 157 destiné à venir reposer en appui contre la face inférieure du plancher avant 2.

En vue de son montage sur ce plancher avant 2, le panneau arrière 150 présente trois seconds orifices de passage 160 agencés de manière à pouvoir être alignés simultanément puis traversés par des seconds goujons correspondants 11 également solidaires du plancher avant 2 et saillant verticalement vers le bas depuis sa face inférieure située en regard du sol.

Comme on peut le voir sur les figures 2 et 3, ces seconds goujons 11 sont similaires aux premiers goujons 10 mais implantés en arrière de ces derniers.

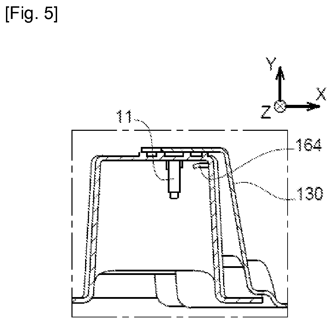

Tel qu'illustré sur les figures 4 et 5, chaque second orifice de passage 160 est ménagé dans la paroi de fond 162 sensiblement horizontale d'un fût correspondant 161 comportant une paroi latérale 163 sensiblement cylindrique et s'étendant verticalement depuis et au dessus de la semelle 151. (figure 3).

Ces seconds orifices de passage 160 présentent un diamètre légèrement supérieur à celui des tiges filetées des seconds goujons 11, de sorte qu'il existe un léger jeu de positionnement du panneau arrière 150 par rapport au plancher avant 2 lorsque chaque second orifice 160 de ce panneau 150 est enfilé sur la tige du second goujon correspondant 11.

Les fûts 161 constituent également des organes de guidage agencés pour coopérer chacun à coulissement, lors de la mise en place du panneau arrière 150 après celle du panneau avant 110, avec une paroi de guidage correspondante 130 du panneau avant 110 de sorte à entrainer l'alignement des seconds orifices 160 avec les seconds goujons 11 correspondants.

Chaque fût 161 comprend également de manière avantageuse des moyens de retenue d'un écrou plastique (non représenté) contre la face inférieure de sa paroi de fond 162 sur le pourtour d'un second orifice de passage 160.

Ces moyens de retenue visibles partiellement sur les figures 4 et 5 comportent trois pattes en L 164 s'étendant depuis la face inférieure de la paroi de fond 162 sur le pourtour du second orifice 160 en étant espacées angulairement de 90° les unes des autres, de sorte à définir entre elles un logement accessible à coulissement pour un tel écrou.

Ces moyens de retenue comprennent également une languette élastiquement déformable 165 saillant en biais depuis la face inférieure de la paroi de fond 162 sur le pourtour du second orifice 160 de manière diamétralement opposée à la patte en L 164 centrale, son extrémité libre étant apte à coopérer en butée avec ledit écrou une fois celui-ci mis en place dans le logement de sorte à empêcher son retrait.

Comme on peut le voir sur la figure 1, le panneau arrière 150 comporte également deux trous 170 ménagés à son extrémité arrière et destinés à permettre sa fixation par vissage à l'aide de vis non représentées sur une chape d'interface en matière plastique 180 préalablement fixée sur un longeronnet arrière de la structure de caisse bordant latéralement le plancher d'assise 5.

L'extrémité arrière du panneau avant 110 comporte également trois fourchettes de prépositionnement horizontales 140 saillant chacune longitudinalement vers l'arrière depuis le sommet d'une paroi de guidage correspondante 130.

Les fourchettes 140 sont agencées pour coopérer chacune par enfourchement, lors de la mise en place du panneau avant 110, avec un second goujon correspondant 10 de sorte à réaliser l'alignement desdits premiers orifices avec lesdits premiers goujons correspondants.

Chaque fourchette 140 présente deux doigts parallèles écartés l'un de l'autre d'une distance légèrement supérieure au diamètre de l'embase circulaire des goujons 10.

Les bords internes se faisant face des extrémités libres de ces deux doigts de chaque fourchette 140 sont avantageusement chanfreinés afin de faciliter l'enfourchement des goujons 10.

On va maintenant décrire rapidement les opérations de montage du déflecteur latéral 100 à l'appui des figures 2 à 5.

Dans un premier temps, l'opérateur en charge du montage doit soulever le panneau avant 110 au dessus de lui en le maintenant à bout de bras, puis le positionner à l'aplomb du plancher avant 2, légèrement en avant des trois seconds goujons 11 de sorte que ces derniers demeurent visibles.

L'opérateur doit ensuite légèrement incliner vers le haut l'extrémité arrière de ce panneau avant 110, positionner les trois fourchettes 140 en regard de ces trois seconds goujons 11, puis les enfourcher sur ces derniers d'un mouvement de translation longitudinale vers l'arrière jusqu'à ce que leurs embases viennent en butée contre le fond de ces fourchettes.

Il ne lui reste plus alors qu'à relever le reste de ce panneau avant 110 de sorte que les premiers goujons 10 traversent les orifices de passage 120 (figure 2), puis à visser les écrous en plastique sur ces premiers goujons 10 de manière à plaquer ce panneau avant 110 contre le plancher avant 2 et à assurer sa fixation.

Pour mettre en place le panneau arrière 150, l'opérateur doit tout d'abord le soulever au dessus de lui en le maintenant à bout de bras, puis le positionner horizontalement à l'arrière et en dessous du panneau avant 110 de sorte que ses trois fûts de fixation 161 se trouvent sensiblement à l'aplomb des trois parois de guidage 130 tel qu'illustré par les figures 3 et 4.

L'opérateur doit ensuite relever verticalement ce panneau arrière 150 : les parois de guidage 130 guidant alors à coulissement les fûts 161 de sorte que leurs orifices de passage 160 s'alignent avec les trois seconds goujons 11 et soient ensuite traversés par ces derniers comme montré sur la figure 5.

Il ne lui reste plus alors qu'à visser les écrous en plastique sur ces seconds goujons 11 ainsi que l'extrémité arrière du panneau arrière 150 sur la chape 180 à l'aide de deux vis traversant les trous 170, de manière à plaquer ce panneau arrière 150 contre le plancher avant 2 et à assurer sa fixation.

Selon des variantes de réalisation non représentées, les parois de guidage, les fûts de guidage et/ou les fourchettes sont conformées différents. Leur nombre et/ou leur agencement peut également être différent.

## Revendications

1. Déflecteur aérodynamique destiné à être fixé contre la face inférieure du soubassement de caisse d'un véhicule automobile, comportant un panneau avant (110) et un panneau arrière (150) destinés à s'étendre dans le prolongement longitudinal l'un de l'autre, ledit panneau avant (110) présentant une pluralité de premiers orifices (120) agencés de manière à pouvoir être alignés simultanément puis traversés par des premiers goujons (10) correspondants solidaires dudit soubassement, ledit panneau arrière (150) présentant une pluralité de seconds orifices (160) agencés de manière à pouvoir être alignés simultanément puis traversés par des seconds goujons (11) solidaires dudit soubassement, **caractérisé en ce que** ledit panneau arrière (150) comporte à son extrémité avant des organes de guidage (161) agencés pour coopérer chacun à coulissement, lors de sa mise en place après celle dudit panneau avant (110), avec une paroi de guidage correspondante (130) ménagée à l'extrémité arrière dudit panneau avant (110) de sorte à réaliser l'alignement desdits seconds orifices (160) avec lesdits seconds goujons (11) correspondants.

2. Déflecteur aérodynamique selon la revendication 1, **caractérisé en ce que** l'extrémité arrière dudit panneau avant (110) comporte également des fourchettes de pré-positionnement (140) saillant chacune longitudinalement vers l'arrière depuis le sommet d'une paroi de guidage (130) correspondante, lesdites fourchettes (140) étant agencées pour coopérer chacune par enfourchement, lors de la mise en place dudit panneau avant (110), avec un dit second goujon (11) correspondant de sorte à réaliser l'alignement desdits premiers orifices (120 avec lesdits premiers goujons (10) correspondants.

3. Déflecteur aérodynamique selon l'une des revendications 1 ou 2, **caractérisé en ce que** lesdites parois de guidage (130) sont incurvées et présentent chacune une section horizontale en arc cercle dont la concavité est tournée vers l'arrière.

4. Déflecteur aérodynamique selon l'une des revendications 1 à 3, **caractérisé en ce que** lesdites parois de guidage (130) s'étendent chacune sur un secteur angulaire compris entre 90 et 180°.

5. Déflecteur aérodynamique selon l'une des revendications 1 à 4, **caractérisé en ce que** lesdites parois de guidage (130) présentent chacune une forme tronconique se rétrécissant vers le haut.

6. Déflecteur aérodynamique selon l'une des revendications 1 à 5, **caractérisé en ce que** lesdits organes de guidage sont chacun constitués par un fût (161) d'axe vertical comprenant une paroi latérale (163) sensiblement cylindrique ainsi qu'une paroi de fond (162) dans laquelle est ménagé un dit second orifice (160).

7. Déflecteur aérodynamique selon la revendication 6, **caractérisé en ce que** chaque fût de guidage (161) comprend des moyens de retenue (164, 165) d'un écrou contre la face inférieure de sa paroi de fond (162) sur le pourtour d'un dit second orifice (160).

8. Déflecteur aérodynamique selon la revendication 7, **caractérisé en ce que** lesdits moyens de retenue comportent plusieurs pattes en L (164) s'étendant depuis la face inférieure de ladite paroi de fond (162) sur le pourtour d'un dit second orifice (160) de sorte à définir entre elles un logement accessible à coulissement pour un tel écrou.

9. Déflecteur aérodynamique selon la revendication 8, **caractérisé en ce que** lesdits moyens de retenue comportent également une languette élastiquement déformable (165) saillant en biais depuis la face inférieure de la paroi de fond (162) sur le pourtour d'un dit second orifice (160), ladite languette (165) étant agencée de sorte que son extrémité libre soit apte à coopérer en butée avec ledit écrou une fois celui-ci mis en place dans ledit logement de sorte à empêcher son retrait.

10. Véhicule automobile **caractérisé en ce qu'**il comporte au moins un déflecteur selon l'une des revendications 1 à 9 fixé contre la face inférieure du soubassement de caisse.

## Patentansprüche

1. Aerodynamischer Deflektor zur Befestigung an der Unterseite des Karosserieunterbaus eines Kraftfahrzeugs, mit einer Frontplatte (110) und einer Rückwand (150), die sich in Längsrichtung voneinander erstrecken, wobei die Frontplatte (110) eine Vielzahl von ersten Öffnungen (120) aufweist, die so angeordnet sind, dass sie gleichzeitig ausgerichtet werden können und von entsprechenden ersten Stiften (10) durchquert werden, die mit dem Unterbau fest verbunden sind, wobei die Rückwand (150) eine Vielzahl von zweiten Öffnungen aufweist (160), die so angeordnet sind, dass sie gleichzeitig ausgerichtet werden können und durch zweite Bolzen (11), die mit dem Unterteil fest verbunden sind, durchquert werden können, **dadurch gekennzeichnet, dass** die hintere Platte (150) an ihrem vorderen Ende Führungsorgane (161) aufweist, die so angeordnet sind, dass sie bei ihrer Anordnung nach der Anordnung der vorderen Platte (110) jeweils gleitend mit einer entsprechenden Führungswand (130) zusammenwirken, die am hinteren Ende der vorderen Platte (110) derart angeordnet ist, dass die Ausrichtung der zweiten Öffnungen (160) mit den zweiten Öffnungen bewirkt wird Entsprechende Bolzen (11).

2. Aerodynamische Leiteinrichtung nach Anspruch 1, **dadurch gekennzeichnet, dass** das hintere Ende der vorderen Platte (110) auch Vorpositionierungsgabeln (140) aufweist, die jeweils in Längsrichtung nach hinten von der Oberseite einer entsprechenden Führungswand (130) vorstehen, wobei die Gabeln (140) so angeordnet sind, dass sie beim Einsetzen der vorderen Platte (110) jeweils durch Eingreifen mit einem entsprechenden zweiten Bolzen (11) zusammenwirken, um die Ausrichtung der ersten Öffnungen zu erreichen (120 mit den entsprechenden ersten Bolzen (10).

3. Aerodynamische Leiteinrichtung nach einem der Ansprüche 1 oder 2, **dadurch gekennzeichnet, dass** die Führungswände (130) gekrümmt sind und jeweils einen horizontalen bogenförmigen Querschnitt aufweisen, dessen Konkavität nach hinten gerichtet ist.

4. Aerodynamische Leiteinrichtung nach einem der Ansprüche 1 bis 3, **dadurch gekennzeichnet, dass** sich die Führungswände (130) jeweils über einen Winkelsektor zwischen 90° und 180° erstrecken.

5. Aerodynamische Leiteinrichtung nach einem der Ansprüche 1 bis 4, **dadurch gekennzeichnet, dass** die Führungswände (130) jeweils eine sich nach oben verjüngende kegelstumpfförmige Form aufweisen.

6. Aerodynamische Leiteinrichtung nach einem der Ansprüche 1 bis 5, **dadurch gekennzeichnet, dass** die Führungsorgane jeweils aus einem Schaft (161) mit vertikaler Achse bestehen, der eine im Wesentlichen zylindrische Seitenwand (163) sowie eine Bodenwand (162) aufweist, in der eine zweite Öffnung (160) vorgesehen ist.

7. Aerodynamische Leiteinrichtung nach Anspruch 6, **dadurch gekennzeichnet, dass** jeder Führungsschaft (161) Mittel (164, 165) zum Festhalten einer Mutter an der Unterseite seiner Bodenwand (162) entlang des Umfangs einer zweiten Öffnung (160) aufweist.

8. Aerodynamische Leiteinrichtung nach Anspruch 7, **dadurch gekennzeichnet, dass** die Rückhalteeinrichtung eine Vielzahl von L-förmigen Ansätzen (164) aufweist, die sich von der Unterseite der Bodenwand (162) über den Umfang einer zweiten Öffnung (160) erstrecken, um dazwischen ein gleitbares Gehäuse für eine solche Mutter zu definieren.

9. Aerodynamische Leiteinrichtung nach Anspruch 8, **dadurch gekennzeichnet, dass** die Rückhalteeinrichtung ferner eine elastisch verformbare Zunge (165) aufweist, die schräg von der Unterseite der Bodenwand (162) um den Umfang einer zweiten Öffnung (160) vorsteht, wobei die Zunge (165) so angeordnet ist, dass ihr freies Ende in der Lage ist, mit der Mutter in Anlage zu kommen, wenn diese in das Gehäuse eingesetzt ist, um deren Entfernung zu verhindern.

10. Kraftfahrzeug, **dadurch gekennzeichnet, dass** es mindestens einen Abweiser nach einem der Ansprüche 1 bis 9 aufweist, der an der Unterseite des Aufbaubodens befestigt ist.

## Claims

1. Aerodynamic deflector intended to be fixed against the lower face of the body underbody of a motor vehicle, comprising a front sign (110) and a rear panel (150) intended to extend in the longitudinal extension of one another, said front sign (110) having a plurality of first orifices (120) arranged so as to be able to be aligned simultaneously and then passed through by corresponding first studs (10) integral with said underbody, said rear panel (150) having a plurality of second orifices (160) arranged so as to be able to be aligned simultaneously and then passed through by second studs (11) integral with said underbody, **characterised in that** said rear panel (150) comprises at its front end guide members (1) arranged to cooperate) sliding, during its positioning after that of said front sign (110), with a corresponding guide wall (130) provided at the rear end of said front sign (110) so as to align said second orifices (160) with said corresponding second studs (11).

2. Aerodynamic deflector according to claim 1, wherein the rear end of said front sign (110) also comprises pre-positioning forks (140) each projecting longitudinally towards the rear from the top of a corresponding guide wall (130), said forks (140) being arranged to cooperate each by being fitted, during the positioning of said front sign (110), with a said corresponding second stud (11) so as to align said first orifices (120) with said corresponding first studs (10).

3. Aerodynamic deflector according to one of Claims 1 or 2, **characterised in that** said guide walls (130) are curved and each have a horizontal section in the form of a to hoop a case arc, the concavity of which is shift towards the rear.

4. Aerodynamic deflector according to one of Claims 1 to 3, **characterised in that** said guide walls (130) each extend over an angular sector of between 90 and 180°.

5. Aerodynamic deflector according to one of Claims 1 to 4, **characterised in that** said guide walls (130) each have a frustoconical shape narrowing upwards.

6. Aerodynamic deflector according to one of Claims 1 to 5, **characterised in that** said guide members each consist of a shaft (161) with a vertical axis comprising a substantially cylindrical side wall (163) and a bottom wall (162) in which a said second orifice (160) is formed.

7. Aerodynamic deflector according to Claim 6, **characterised in that** each guide shaft (161) comprises means (164, 165) for retaining a nut against the lower face of its bottom wall (162) on the periphery of a said second orifice (160).

8. Aerodynamic deflector according to Claim 7, **characterised in that** said retaining means comprise several L-shaped lugs (164) extending from the lower face of said bottom wall (162) on the periphery of a said second orifice (160) so as to define between them a housing accessible for sliding for such a nut.

9. Aerodynamic deflector according to Claim 8, **characterised in that** said retaining means also comprise an elastically deformable tongue (165) projecting at an angle from the lower face of the bottom wall (162) on the periphery of a said second orifice (160), said tongue (165) being arranged so that its free end is able to cooperate in abutment with said nut once the latter has been put into place in said housing so as to prevent its withdrawal.

10. Motor vehicle, **characterised in that** it comprises at least one deflector according to one of Claims 1 to 9 fixed against the lower face of the body base.
